# FASCICULE DE BREVET EUROPEEN

(11) **EP 2 932 051 B1**
(45) Date de publication et mention de la délivrance du brevet: **28.09.2016**
(21) Numéro de dépôt: 13815079.2
(22) Date de dépôt: 12.12.2013
(51) Int. Cl.: F01D 25/24, F02K 1/82, F02C 7/045

(54) **PANNEAUX ACOUSTIQUES AMOVIBLES POUR CARTER DE TURBOREACTEUR**
ABNEHMBARE AKUSTISCHE PLATTEN FÜR EIN GEHÄUSE EINES STRAHLTRIEBWERKS
REMOVABLE ACOUSTIC PANELS FOR TURBOJET ENGINE CASING

(30) Priorité: 17.12.2012 FR 1262150
(43) Date de publication de la demande: 21.10.2015
(73) Titulaire: Safran Aircraft Engines, 75015 Paris (FR)
(72) Inventeur: RIOU, Georges, Jean, Xavier, F-77550 Moissy-Cramayel cedex (FR); JODET, Norman, F-77550 Moissy-Cramayel cedex (FR); MARDJONO, Jacky Novi, F-77550 Moissy-Cramayel cedex (FR)
(74) Mandataire: Gevers & Orès
(86) Numéro de dépôt international: PCT/FR2013/053053
(87) Numéro de publication internationale: WO 2014/096634

(56) Documents cités:
- EP-A1- 1 369 555
- EP-A2- 1 972 755
- EP-A2- 2 105 597
- FR-A1- 2 898 870
- US-A1- 2009 324 390

## Description

### Domaine technique :

La présente invention concerne le domaine des turboréacteurs, plus particulièrement la conception de leur partie amont pour atténuer les bruits.

### Exposé de l'art antérieur :

Un moyen de réduire l'émission acoustique d'un turboréacteur consiste à fixer des panneaux absorbants sur la surface interne du carter de la soufflante. Ces panneaux sont localisés en amont de la soufflante et servent également à reconstituer le conduit d'entrée d'air. Ils occupent un espace annulaire dégagé vers l'avant en opération de maintenance, quand le turboréacteur est séparé de la nacelle. En effet, l'avant du carter de soufflante comporte en amont une bride sur laquelle se fixe la manche d'entrée d'air de la nacelle de telle sorte que leurs surfaces internes, avec les panneaux acoustiques, se raccordent pour former le conduit d'entrée d'air du turboréacteur. Par ailleurs, à l'aval de cet espace annulaire, une couronne en matériau abradable est fixée sur le carter pour limiter le jeu entre les aubes de la soufflante et son conduit d'air.

Dans une solution déjà utilisée, les panneaux sont boulonnés sous le carter. Ce mode de fixation présente plusieurs inconvénients :
- fragilisation de la structure du carter par les perçages nécessaires au boulonnage ;
- risques de perte des vis utilisées pour le boulonnage pouvant endommager gravement les aubes ;
- accessibilité difficile des contre écrous de boulonnage à l'extérieur du carter pour les opérations de maintenance.

Pour remédier à ces inconvénients, il a été imaginé des solutions par collage sans boulonnage mais elles présentent des problèmes de réparabilité. D'autres modes de fixation sont également décrits dans US-A1-2009/324390 et FR2-A1-2 898 870. La conception des panneaux et de leur fixation dans cet environnement s'avère délicate car il faut obtenir un montage à la fois robuste et simple, tout en optimisant la place réservée au matériau acoustique.

### Exposé du problème technique et de l'invention:

La présente invention a pour but de maximiser l'efficacité du revêtement acoustique, tout en facilitant la maintenance par l'optimisation de la fonction amovible des panneaux.
A cet effet, l'invention concerne un panneau acoustique selon la revendication 1 destiné à être fixé intérieurement au carter de soufflante d'un turboréacteur, comportant une face extérieure et une face intérieure courbées autour d'un axe et deux faces transversales opposées axialement, la face courbe extérieure présentant au moins un premier évidement du côté d'une première face transversale et au moins un second évidement du côté de la face transversale opposée, lesdits évidements comprenant chacun un moyen d'accrochage et n'étant pas débouchant sur la face courbe intérieure du panneau.

Préférentiellement, la courbure sur la face externe du panneau correspond à celle de la paroi intérieure du carter autour de l'axe du turboréacteur et la longueur axiale du panneau est égale à celle de l'espace annulaire. Dans ce cas, l'invention atteint son objectif de maximiser l'efficacité du revêtement acoustique en permettant de remplir l'espace annulaire avec des panneaux constitués dudit matériau qui sont plaqués contre le carter et qui minimisent les discontinuités d'impédance acoustique par une liaison jointive avec les structures voisines pour permettre la continuité des parois du conduit d'air, les évidements étant destinés à loger les moyens de fixation au carter. L'optimisation des jonctions entre panneaux dans l'espace annulaire est assurée par leur géométrie ajustée.

Les moyens d'accrochage du premier évidement comportent au moins un organe d'encastrement axial, mâle ou femelle. Cela permet, lorsque le panneau est positionné à l'avant du carter de soufflante avec ledit premier évidement en aval, de fixer le panneau par une liaison en aval encastrée puis de verrouiller le panneau en amont. De la sorte, il n'est pas nécessaire d'accéder à la liaison en aval du panneau pour la verrouiller ni d'utiliser des éléments tels que vis ou écrous.

L'organe d'encastrement axial aménagé dans le premier évidement affleure à la face courbe extérieure. Cette disposition permet de minimiser la hauteur du moyen de fixation avec lequel il coopère, donc d'optimiser le volume occupé par le matériau acoustique.

De manière préférée, un moyen d'accrochage agencé pour contenir au moins un moyen de verrouillage est aménagé dans ledit second évidement, ce dernier débouchant sur la face transversale correspondante par une ouverture de section sensiblement égale à la section maximale dudit évidement. Grâce à cette ouverture, l'accès aux moyens de verrouillage est possible lorsque le panneau est en position sur le carter avec la face correspondante vers l'amont, la nacelle ayant été enlevée, ce qui facilite les opérations de montage et de démontage.

De manière avantageuse, le moyen d'accrochage aménagé dans le second évidement est agencé de manière à ce que le verrouillage se fasse dans le sens radial. Cette solution permet de verrouiller solidement les liaisons et d'ajuster si besoin la position du panneau pour corriger les imperfections du carter en interposant des cales. Il sera tiré pleinement partie desdites cales dans un mode de réalisation où la liaison par encastrement du premier évidement est également adaptée à leur utilisation.

L'invention concerne également un turboréacteur comportant un carter de soufflante, au moins deux panneaux acoustiques et des moyens de fixation au carter aptes à coopérer avec les moyens d'accrochages aménagés dans lesdits premiers et seconds évidements pour maintenir les panneaux contre la paroi intérieure du carter.

De préférence, lesdits panneaux acoustiques sont disposés à une extrémité du carter, en présentant leur face transversale située du côté du second évidement vers ladite extrémité.

Dans cette configuration, les évidements isolent avantageusement le moyen de verrouillage du conduit d'air lorsque le panneau acoustique est fixé au carter et empêchent la perte intempestive de vis ou d'écrous dans le réacteur en fonctionnement.

Selon un autre aspect de l'invention, les moyens de fixation sont attachés au carter, à l'intérieur de l'espace annulaire. La robustesse du dispositif est assurée par le fait que les moyens de fixation n'interagissent pas avec les autres structures, en aval la couronne, en matériau moins robuste que celui du carter, et en amont la bride de fixation du carter.

Avantageusement, un mode de réalisation dans lequel les modes de fixation sont collés au carter évite de fragiliser la structure du carter par des perçages.

L'invention concerne également un procédé de montage d'un turboréacteur selon la revendication 12 dans lequel :
- le panneau est introduit par l'intérieur contre le carter de façon à présenter le moyen d'accrochage dudit premier évidement devant le moyen de fixation avec lequel il coopère,
- le moyen d'accrochage dudit premier évidement est encastré dans le moyen de fixation avec lequel il coopère de telle sorte que le moyen d'accrochage dudit second évidement est présenté devant le moyen de fixation avec lequel il coopère,
- ledit moyen de verrouillage est appliqué entre le moyen de fixation et le moyen d'accrochage dudit second évidement.

Cela permet un positionnement aisé des panneaux acoustiques par le fait que lors d'une opération de montage, par exemple en extrémité amont du carter, la liaison aval permet un encastrement qui sera ensuite mis sous contrainte lorsque le panneau sera installé dans position définitive et la liaison amont verrouillée. Il n'est donc pas nécessaire par la suite d'accéder aux moyens de cette liaison. En amont, le carter peut ensuite être solidarisé à la nacelle sans intervenir sur les panneaux.

### Description d'un mode de réalisation de l'invention :

On décrit maintenant plus en détail deux modes de réalisation non limitatifs de l'invention, en référence aux dessins annexés sur lesquels :
La figure 1 représente schématiquement une demi coupe axiale d'un turboréacteur dans sa nacelle ;
La figure 2 montre une vue en perspective de la zone à remplir d'un matériau acoustique avec un panneau monté selon un premier mode de réalisation de l'invention.
La figure 3 montre une vue en perspective d'un panneau présentant les moyens d'accrochages sur le panneau en aval selon un premier mode de réalisation de l'invention.
La figure 4 montre une vue de l'aval du panneau avec ses moyens d'accrochage encastrés dans les moyens de fixation correspondants sur le carter selon un premier mode de réalisation de l'invention..
La figure 5 montre une vue en perspective d'un panneau présentant les moyens d'accrochage sur le panneau en amont selon un premier mode de réalisation de l'invention.
La figure 6 montre une vue de l'amont du panneau avec ses moyens d'accrochage serrés dans les moyens de fixation correspondants sur le carter selon un premier mode de réalisation de l'invention.
La figure 7 montre une coupe axiale du panneau fixé au carter à l'endroit des liaisons en amont et en aval selon un premier mode de réalisation de l'invention.
La figure 8 montre une vue en perspective d'un panneau présentant les moyens d'accrochages sur le panneau en aval selon un deuxième mode de réalisation de l'invention.
La figure 9 montre une vue de l'aval du panneau avec ses moyens d'accrochage encastrés dans les moyens de fixation correspondants sur le carter selon un deuxième mode de réalisation de l'invention..
La figure 10 montre une vue en perspective d'un panneau présentant les moyens d'accrochage sur le panneau en amont selon un deuxième mode de réalisation de l'invention.
La figure 11 montre une vue de l'amont du panneau avec ses moyens d'accrochage serrés dans les moyens de fixation correspondants sur le carter selon un deuxième mode de réalisation de l'invention.
La figure 12 montre une coupe axiale du panneau fixé au carter à l'endroit des liaisons en amont et en aval selon un deuxième mode de réalisation de l'invention.

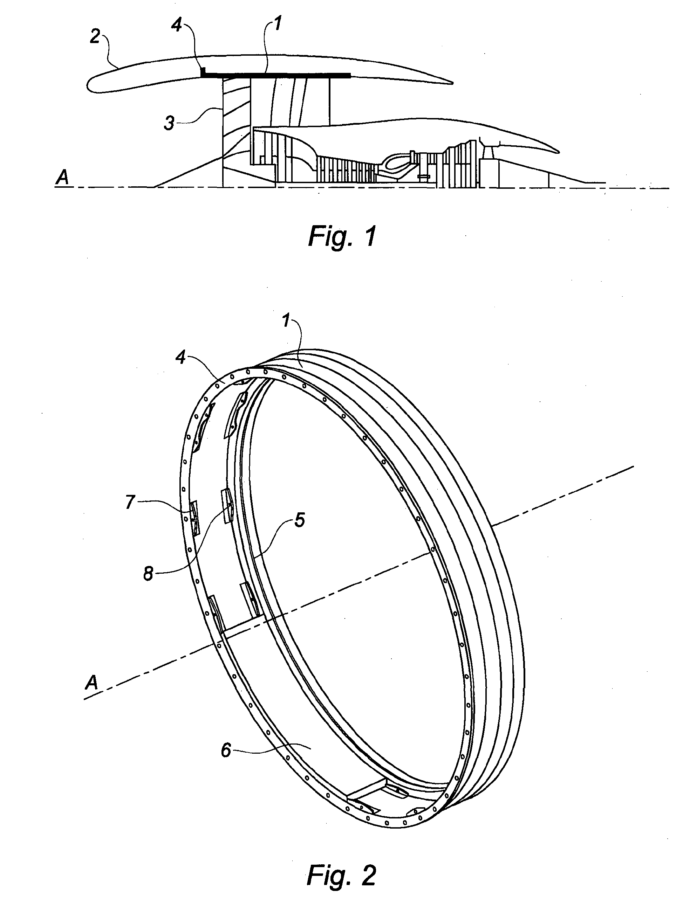

En se référant à la figure 1, on a représenté en coupe axiale de manière schématique un turboréacteur ayant un axe de révolution A, monté avec sa nacelle. De manière préférentielle, il s'agit d'un turboréacteur à double flux dont la soufflante est le premier étage en entrée. Le turboréacteur comprend un carter de soufflante 1, appelé aussi carter fan, qui maintient la nacelle 2 et forme le conduit d'air de l'écoulement qui passe au travers des aubes 3 de la soufflante. La nacelle est fixée en particulier à la bride 4 du carter pour solidariser leur jonction au niveau de la manche d'entrée d'air en entrée du turboréacteur. Pour atténuer le bruit généré vers l'amont par le turboréacteur, en particulier celui dû au fonctionnement de la soufflante, il est connu de revêtir l'intérieur de la nacelle et la partie du carter formant le conduit d'entrée d'air en amont de la soufflante d'un matériau acoustique absorbant le bruit. La présente invention vise le revêtement acoustique de la partie du carter correspondant à l'espace entre la bride 4 et les aubes de la soufflante 3.

La figure 2 montre la zone qui doit être remplie d'un matériau acoustique. Elle forme un espace annulaire délimité sur sa face circonférentielle extérieure par l'intérieur du carter 1 et sur face interne par la surface du conduit d'air. En amont, cet espace est limité par le plan d'entrée du carter, c'est-à-dire le plan perpendiculaire à l'axe du carter passant par la face externe de la bride 4, puisque lorsque le turboréacteur est monté, c'est le revêtement interne de la nacelle 2 qui reconstitue la manche d'entrée d'air en amont. Vers l'aval, cet espace annulaire est limité par la face avant d'une couronne 5 fixée au carter qui reconstitue le conduit d'air en aval.

Le revêtement acoustique dans cet espace annulaire est constitué par exemple de six panneaux 6 fixés au carter, dont un est représenté. Un nombre différent de six peut être envisagé mais ce dernier constitue un bon compromis entre le fait que les panneaux soient jointifs pour optimiser le revêtement acoustique et qu'au moins l'un d'eux doit pouvoir être détaché facilement du carter vers l'intérieur lorsque tous les panneaux sont en place, pour les opérations de montage et démontage.

Pour s'adapter dans l'espace annulaire, chaque panneau 6 est donc courbé suivant l'axe A du réacteur pour avoir la même courbure que l'intérieur du carter sur sa face courbe extérieure 61, ses faces latérales sont parallèles à cet axe A et ses faces transversales, qui sont définies comme les faces amont 64 et aval 63 lorsque le panneau est positionné dans le carter, limitent ledit panneau dans le sens axial.

La face courbe extérieure 61 présente une première série d'évidements 9 du côté de la face aval transversale 63 et une seconde série d'évidements 12 du côté de la face transversale amont opposée. Ces évidements ne sont pas débouchant sur la face courbe intérieure 62 du panneau. Les évidements aval 9 comprennent chacun un moyen d'accrochage par encastrement et les évidements amont 12 comprennent chacun un moyen d'accrochage par verrouillage. Le fonctionnement de ces moyens d'accrochage avec les moyens de fixation pour réaliser la liaison du panneau sur le carter est détaillé par la suite.

Chaque panneau 6 est fixé au carter par deux séries de liaisons, des liaisons situées en amont et d'autres situées en aval. Chacune de ces liaisons est réalisée par un moyen de fixation sur le carter et un moyen d'accrochage sur le panneau qui coopèrent. De manière préférentielle, les moyens de fixation en amont 7 et en aval 8 sont situés aux extrémités correspondantes de l'espace annulaire.

Dans un premier mode de réalisation, les moyens de fixation sur le carter prennent la forme de pattes indépendantes alignées sur deux cercles et chaque panneau est fixé au carter par trois liaisons en amont et trois liaisons en aval. Des variantes peuvent être envisagées, par exemple soit avec un nombre de liaisons différent, soit avec des formes différentes où les fixations d'une série sont reliées en un anneau.

Avantageusement, comme on le voit sur la figure 2 ainsi que sur les suivantes, les moyens de fixation 7 et 8 sont fixés au carter et sont à l'intérieur de l'espace annulaire occupé par les panneaux 6. Ils n'ont donc aucune interaction avec les structures voisines, la couronne 5 en aval, la nacelle 2 ou la bride 4 en amont.

De manière préférentielle, ces moyens de fixation sont collés au carter. Cette solution préserve mieux l'intégrité mécanique du carter que le rivetage, en particulier lorsque le carter est en matériau composite.

A chaque série de moyens de fixation sur le carter correspond une série de moyens d'accrochage sur les panneaux conçus pour conférer des fonctionnalités différentes à la liaison suivant qu'elle est en amont ou en aval. Ces moyens sont décrits ci-après avec la liaison réalisée.

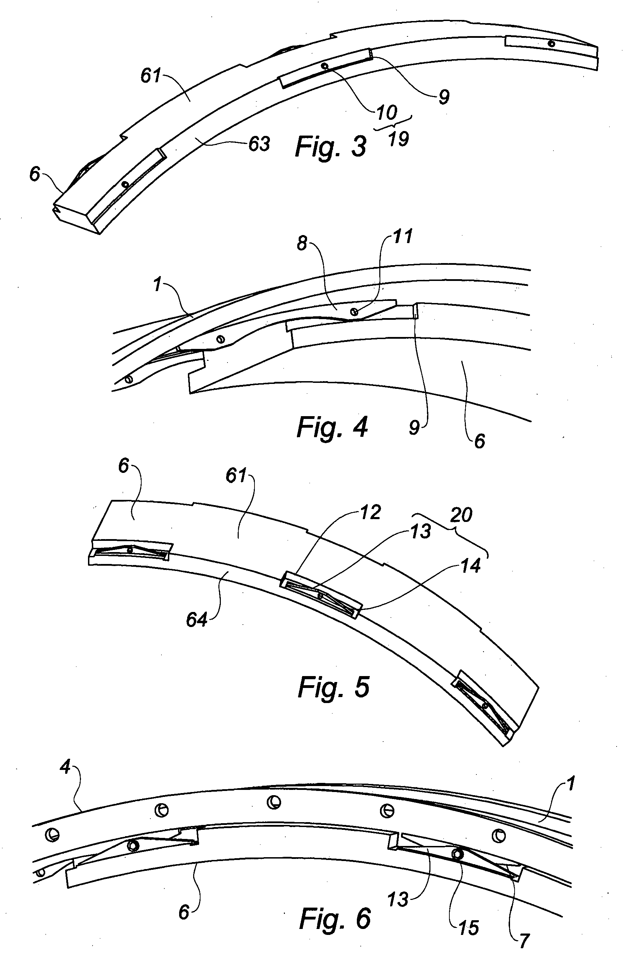

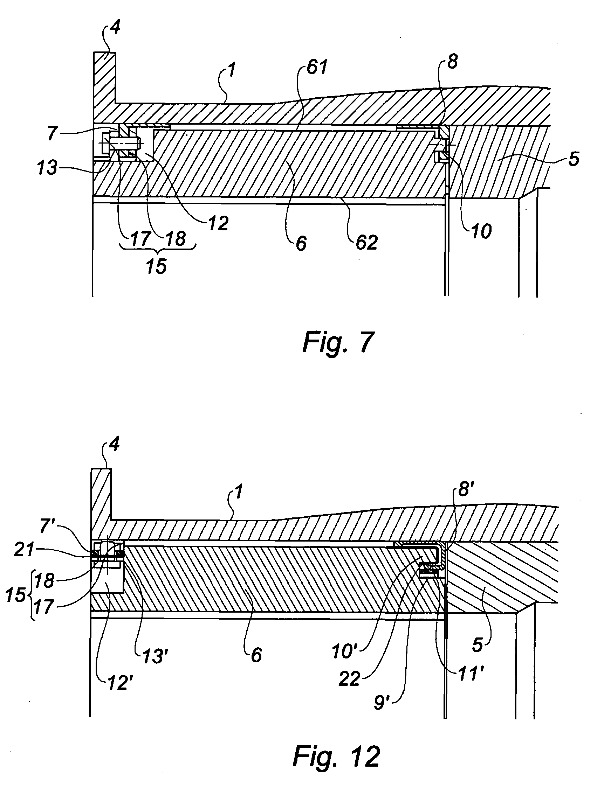

Pour décrire une liaison en aval, la figure 3 présente une vue de l'aval en perspective d'un panneau seul et la figure 4 montre une liaison aval réalisée par un moyen de fixation et le moyen d'accrochage correspondant. Le moyen de fixation 8 sur le carter comporte une patte plane perpendiculaire à l'axe du carter dont la hauteur est nettement inférieure à l'épaisseur de l'espace annulaire à combler. Cette patte est percée d'un trou 11. Le moyen d'accrochage 19 du panneau correspondant est aménagé dans un premier évidement 9 sur la face courbe extérieure 61 allant jusqu'à la face aval 63, et comporte un pion 10 tourné vers l'aval, d'une longueur inférieure à la longueur de l'évidement dans le sens axial. L'évidement 9 est conçu pour laisser passer la patte du moyen de fixation 8 :
- il part de la face circonférentielle extérieure 61 du panneau avec une hauteur au moins égale à celle de la patte du moyen de fixation 8,
- sa largeur est au moins égale à celle de la patte du moyen de fixation,
- il débouche sur la face transversale 63 correspondante et sa longueur dans la direction axiale correspond à la distance de la face amont de la patte de fixation du bord aval 63 du panneau lorsqu'il est en position, ainsi qu'on peut le voir sur la figure 7.

Bien sûr, l'évidement 9 est situé sur le panneau de manière à entourer la patte de fixation 8 lorsque le panneau est positionné dans l'espace annulaire et pour que le pion 10 rentre dans le trou 11 du moyen de fixation aval.

De cette manière, les moyens de fixation 8 sur le carter et les moyens d'accrochage en aval 19 forment lorsqu'ils sont encastrés une liaison qui bloque tous les mouvements sauf une translation axiale vers l'amont. De plus, la liaison est rompue lorsque cette translation vers l'amont se fait sur une plus grande distance que la longueur du pion 10.

Le pion forme l'organe d'encastrement 10 du moyen d'accrochage 19. Dans l'exemple décrit la section du pion 10 est circulaire, mais d'autres modes de réalisation sont concevables. En particulier, l'organe d'encastrement 10 du moyen d'accrochage peut être femelle, l'organe d'encastrement 11 du moyen de fixation sera alors mâle. Dans une variante de réalisation, la patte de fixation 8 pourrait comporter un pion qui s'encastre dans un trou pratiqué au fond de l'évidement 12. De plus, ces organes d'encastrement 10 et 11 sont les organes, respectivement du moyen d'accrochage et du moyen de fixation, qui positionnent précisément le panneau en aval. De plus, le moyen d'accrochage 19 à l'intérieur dudit évidement 9 peut comporter plusieurs organes d'encastrement 10 individualisés.

De manière avantageuse, la forme de l'organe d'encastrement 10 par rapport à l'organe d'encastrement 11 du moyen de fixation est telle qu'ils s'emboîtent en forçant et que le panneau est ainsi maintenu par un « effet d'étau ». Un montage serré de ce type permet un positionnement plus précis des panneaux.

Pour décrire la série de liaisons en amont, la figure 5 présente une vue de l'amont en perspective d'un panneau seul et la figure 6 montre une liaison amont réalisée par un moyen de fixation et le moyen d'accrochage correspondant solidarisés par application d'un moyen de verrouillage. Le moyen de fixation amont 7 sur le carter comporte une patte de même forme que celle du moyen de fixation aval 8. Cette patte est également percée d'un trou 16 qui n'est pas représenté sur les figures. Le moyen d'accrochage 20 correspondant du panneau est aménagé dans un second évidement 12 sur face extérieure 61 allant jusqu'à la face transversale en amont 64, opposée à la face transversale aval, est constitué d'une patte plane 13 perpendiculaire à la direction axiale, percée d'un trou 14. Le trou 14 est l'organe de positionnement dans lequel passera la vis 17 du moyen de verrouillage 15.

L'évidement 12 est conçu pour laisser passer la patte du moyen de fixation amont 8 :
- il part de la face circonférentielle extérieure 61 du panneau avec une hauteur au moins égale à celle de la patte du moyen de fixation,
- sa largeur est au moins égale à celle de la patte du moyen de fixation,
- il débouche sur la face transversale 64 correspondante et sa longueur dans la direction axiale correspond à la distance de la face aval de la patte du moyen de fixation 7 du bord amont 64 du panneau lorsqu'il est fixé au carter augmentée d'une longueur au moins égale à la longueur de l'organe d'encastrement 10 des moyens d'accrochage 19 en aval du panneau, ainsi qu'on peut le voir sur la figure 7.

La patte plane 13 est située à une distance du fond aval de l'évidement 12 telle qu'elle soit à l'extérieur de la patte de fixation amont 7 et jointive avec elle lorsque le panneau est fixé au carter, comme l'illustre la figure 7.

Bien sûr, l'évidement 12 est situé sur le panneau de manière à entourer la patte de fixation 7 lorsque le panneau est positionné dans l'espace annulaire et pour que le trou 14 de la patte plane 13 soit en face du trou 16 de la patte du moyen de fixation 7. Les trous 14 et 16 sont les organes respectivement des moyens d'accrochage et des moyens de fixation qui positionnement précisément le panneau en amont.

Le moyen de fixation 7 sur le carter et le moyen d'accrochage 20 sur le panneau sont alors solidarisés par un moyen de verrouillage 15 constitué d'une vis 17 et d'une plaque formant écrou 18. Les trous 14 et 16 sont les organes respectivement des moyens d'accrochage et des moyens de fixation qui positionnement précisément le panneau en amont.

De manière préférentielle, la section transversale de l'évidement 12 est constante, de son ouverture sur la face amont 64 à son bord opposé. On pourra dire que cette section transversale est sensiblement constante si la taille des variations de forme de la section peut être jugée petite par rapport à celle de la plus petite des extensions de l'évidement 12 dans les trois dimensions. Cette caractéristique permet, en particulier avec la longueur de l'évidement 12 dans la direction axiale telle qu'elle a été décrite, de faire bouger le panneau en translation axiale contre le carter pour engager ou désengager l'encastrement de la liaison aval.

De plus, la taille de l'ouverture des évidements 12 pour la liaison amont donne accès par la face amont 64 du panneau 6 à la vis 17 lorsqu'elle est en place dans le trou 14 de la patte plane 13. La tête de la vis 17 est à l'extérieur, elle est accessible par la face amont du panneau 6 pour verrouiller la liaison en effectuant le serrage tant que le carter 1 n'est pas assemblé à la nacelle 2, la plaque écrou 18 ayant un forme qui bloque sa rotation dans la cavité formée du fond de l'évidement 12 derrière le moyen de fixation 7 et limitée par le carter 1.

De cette manière, les moyens de fixation 7 sur le carter et les moyens d'accrochage en amont 20 forment, lorsque les moyens de verrouillage 15 sont appliqués, une liaison qui bloque tous les mouvements. Par contre, lorsque les moyens de verrouillage 15 ne sont pas appliqués, en particulier la vis 17 enlevée, la liaison autorise une translation axiale vers l'avant sur une distance au moins égale à la longueur de l'organe d'encastrement 10 et une translation radiale vers l'axe du carter qui permet d'écarter le panneau du carter.

Avantageusement, la configuration présentée pour les moyens de la liaison amont permet d'appliquer le moyen de verrouillage dans le sens axial. Cela le rend moins vulnérable aux déformations subies lors du fonctionnement du turboréacteur en vol et donc rend la liaison plus robuste. Cela donne aussi un accès facile par l'amont pour introduire la vis et pratiquer l'opération de serrage.

Comme c'est représenté sur la figure 7, la plaque 18 est située à l'intérieur de l'espace laissé libre entre la patte de fixation amont 7 et le fond de l'évidement 12.

La figure 7 ainsi que les figures 4 et 6 montrent que les évidements minimisent l'encombrement du système de fixation, eut égard à la taille minimale nécessaire des pattes de fixation pour garantir la solidité des liaisons. Ce mode de réalisation correspond donc à un panneau agencé pour combler entièrement de matériau d'absorption acoustique la partie de l'espace annulaire qu'il occupe, de manière jointive avec les faces en amont et en aval dudit espace annulaire, à l'exception d'évidements contenant les moyens d'accrochage, lesdits évidements étant ouverts sur la face extérieure 61 du panneau en regard du carter mais n'atteignant pas la surface intérieure 62 du panneau. De manière complémentaire, la forme du panneau, telle qu'on peut le voir sur les figures, est conçue pour que les panneaux soient jointifs lorsqu'ils sont fixés et qu'il n'y ait pas de discontinuité entre leurs surfaces intérieures. Cette configuration optimise le remplissage de l'espace annulaire en matériau absorbant et son homogénéité. Elle minimise aussi la taille des jonctions. Ainsi, on élimine les grandes discontinuités d'impédance acoustique qui peuvent être sources de bruit.

Avantageusement, chaque panneau ayant une forme qui ne présente aucun vide entre le moyen de verrouillage 15 et sa circonférence intérieure 62 délimitant le conduit d'air, on peut constater sur la figure 7 que lorsque les panneaux sont fixés et que le carter est en place dans la nacelle, les vis 17 et les plaques 18 des moyens de verrouillage 15 sont isolées du conduit d'air. Elles ne risquent donc pas de s'y échapper et de provoquer des dégâts dans les aubes si elles se desserrent.

Le montage d'un panneau acoustique sur le carter de soufflante lorsqu'il est désolidarisé de la nacelle dans un tel dispositif se fait par les étapes suivantes :
- le panneau 6 est introduit par l'intérieur contre le carter 1 de façon que ses moyens d'accrochage 19 pour les liaisons en aval soient présentés devant les moyens de fixation 8 du carter avec lesquels ils coopèrent,
- les moyens d'accrochage 19 pour les liaisons en aval sont encastrés dans les moyens de fixation 8 avec lesquels ils coopèrent de telle sorte que les moyens d'accrochage 20 du panneau de la liaison en amont sont présentés devant les moyens de fixation 7 sur le carter avec lesquels ils coopèrent,
- Les moyens de verrouillage 15 sont appliqués entre les moyens de fixation 7 et les moyens d'accrochage 2 du panneau.

Le terme « présenté » signifie ici que les moyens d'accrochage et les moyens de fixation sont mis l'un contre l'autre de telle sorte que leurs organes qui doivent coopérer se touchent.

En utilisant les caractéristiques du premier mode de réalisation, les étapes de montage des panneaux dans le carter de soufflante du turboréacteur, lorsque la nacelle 2 est enlevée, sont réalisées de la façon suivante :
1. Pour la présentation des moyens d'accrochage 19 en face des moyens de fixation 8 de liaison aval : le panneau 6 est introduit entre les deux rangées de moyens de fixation prévues dans le carter de soufflante, puis le panneau 6 est plaqué vers le carter 1 de telle sorte que ses trois pions 10 de maintien soient en face des trous 11 prévus pour les recevoir dans les moyens de fixation 8 sur le carter. En amont, la patte du moyen de fixation 8 s'insère à l'intérieur de l'évidement 12.
2. L'encastrement de la liaison aval et la présentation des moyens d'accrochage 20 du panneau devant les moyens de fixation 7 de la liaison amont se font en un seul mouvement : le panneau est translaté axialement afin d'introduire en pression les pions 10 dans les trous 11 pour un ajustement serré (un outillage spécifique type extracteur est à prévoir pour le démontage). Ce mouvement a également pour effet de présenter, pour la liaison en amont, les trous 14 des moyens d'accrochage devant les trous 16 des moyens de fixation 7.
3. En ce qui concerne le verrouillage, les vis 17 sont serrées à l'aide de la plaque 18 prévue à cet effet. Par ailleurs, la plaque 18 aura été préalablement introduite dans l'évidement 12 du panneau 6 avant montage, il en sera de même pour toutes les plaques 18 lors du montage du dernier panneau.

Dans un mode de fabrication préférentiel du dispositif, les organes de positionnement sur les moyens de fixation, dans le mode de réalisation particulier décrit, les trous 11 et 16 dans lesquels passent les pions 10 et les vis 17, sont usinés une fois les moyens de fixation positionnées sur le carter. Ce procédé permet d'obtenir un alignement circonférentiel précis des points de liaison, qui corrige les défauts de forme généralement importants liés à la fabrication du carter en composite. De plus si le profil aérodynamique du conduit d'air est axisymétrique, cela permet de produire des panneaux identiques quelque soit leur position sur le carter, ce qui présente un avantage certain pour la fabrication, la gestion du stock et la maintenance liés à cette pièce.

L'invention fonctionne également avec d'autres formes de moyens d'accrochage, comme l'illustre le deuxième mode de réalisation décrit ci-après pour remplir l'espace annulaire indiqué dans la figure 1.

La disposition des panneaux et des moyens de fixation y est similaire à celle qui a été décrite dans la figure 2 pour le premier mode réalisation. La forme des moyens de fixation 7' et 8' diffère et va être décrite plus en détail avec l'explication des liaisons aval et amont.

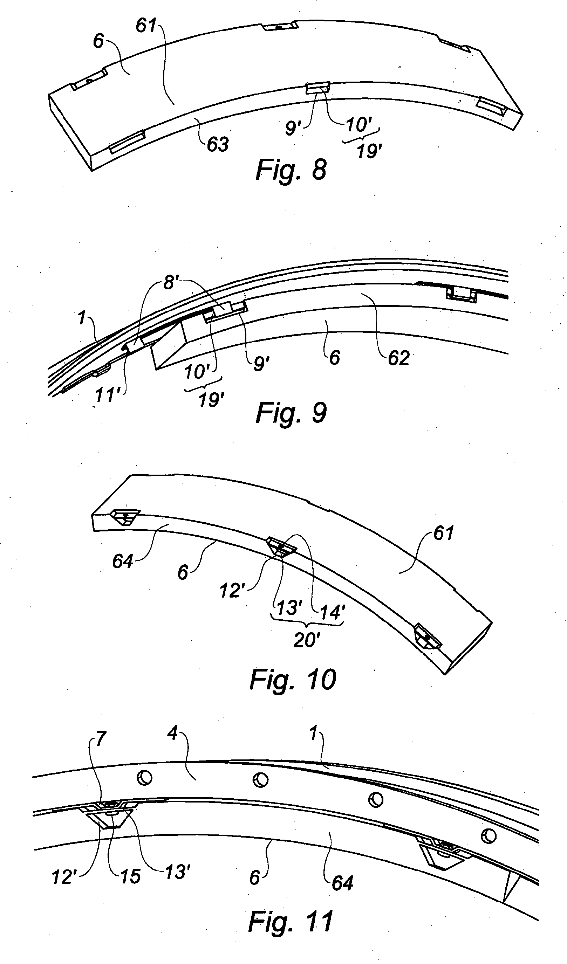

Pour réaliser la liaison aval, représentée sur la figure 9, le moyen de fixation 8' sur le carter forme un crochet plat, attaché au carter par une plaque transversale, avec un retour 11' tourné vers l'amont. La hauteur du crochet est nettement inférieure à l'épaisseur de l'espace annulaire à combler. L'extension axiale de la plaque du moyen de fixation 8' contre le carter est plus grande que celle du retour 11' pour y faire glisser l'organe d'encastrement 10' du panneau. Le moyen d'accrochage 19' du panneau correspondant, représenté sur la figure 8, est aménagé dans un évidement 9' situé sur la face courbe extérieure 61 allant jusqu'à la face aval 63, et d'une réglette 10' obturant l'évidement 9' sur la face courbe extérieure.

L'évidement 9' est conçu pour laisser passer le moyen de fixation 8', comme dans le premier mode de réalisation, et permettre des petits mouvements de translation latéraux autour de celle-ci lorsque le panneau est encastré pour ajuster sa position par rapport aux moyens de fixation en amont. En particulier :
- sa largeur est supérieure à celle du crochet du moyen de fixation,
- il débouche sur la face transversale correspondante 63 et sa longueur dans la direction axiale est au moins égale à la distance de l'extrémité amont retour 11' du bord aval du panneau lorsqu'il est en position, ainsi qu'on peut le voir sur la figure 9 et la figure 12.

La réglette forme l'organe d'encastrement 10' du moyen d'accrochage 19'. Elle est fixée sur les bords de l'évidement 9' en continuité de la face externe du panneau ; elle peut être aussi réalisée dans la masse du panneau. Son épaisseur et son extension dans le sens axial correspondent aux dimensions intérieures du crochet du moyen de fixation 8', de manière à ce qu'elle s'y insère.

De préférence, l'évidement 9' laisse un écart suffisant par rapport au retour 11' du crochet pour permettre un mouvement de rotation du panneau autour d'un axe perpendiculaire à l'axe du carter à l'endroit de la liaison. Ce mouvement est aidé, au niveau de l'interface entre la réglette et le crochet, par de petits bourrelets en extrémité de la partie du crochet fixé au carter. Cela laisse un petit espace du côté du carter qui permet à la réglette de tourner légèrement dans le crochet puis de glisser. Lors du démontage, la liaison est rompue lorsque la réglette 10' est détachée du crochet de la fixation 8'.

De manière avantageuse, la forme du la réglette 10' et l'élasticité du crochet avec la plaque formant le retour 11' sont telles que la réglette entre dans le crochet en forçant et qu'elle y est ainsi maintenu par un « effet d'étau ».

Pour réaliser la liaison amont, représentée sur la figure 11, le moyen de fixation 7' est constitué d'une lame attachée en circonférence à l'intérieur du carter, formant en son milieu une platine percée d'un trou 16' qui n'est pas représenté sur les figures pour laisser passer une vis et qui est écartée du carter de manière à permettre d'insérer dans l'interstice l'extrémité d'une vis et son écrou. Le moyen d'accrochage correspondant 20' du panneau, représenté sur la figure 10, est aménagé dans le second évidement 12' sur la face en amont vers l'extérieur et est constitué d'une patte plane 13' parallèle à la circonférence, percée d'un trou 14'. L'évidement 12 est conçu pour laisser passer la platine du moyen de fixation amont 8' :
- il part de la face circonférentielle extérieure du panneau 61 et il est traversé par la patte plane 13' à une distance telle que le bord radial externe de la plaque plane 13' soit au contact du bord radial interne de la platine du moyen de fixation 7',
- il a une largeur dans la direction circonférentielle et une profondeur dans la direction axiale au moins égales respectivement à celles de la platine du moyen de fixation.
- il débouche sur la face transversale 64 correspondante et sa hauteur totale dans le sens radial est suffisante pour pouvoir faire passer une vis de fixation 17 devant la patte plane 13' par rapport à l'axe A.

Comme c'est représenté sur la figure 12, lorsque le moyen de serrage 15 est appliqué au travers des trous 14' et 16', l'écrou 18 est situé à l'intérieur de l'espace laissé libre entre la platine du moyen de fixation amont 7' et le carter 1 ; de plus la tête de la vis 17 et l'écrou 18 sont donc accessibles par la face amont du panneau 6.

Avantageusement, des moyens de calages sous forme de plaques 21 et 22 sont prévus pour régler l'écartement du panneau à l'endroit de chaque liaison. La manière de les interposer dans les liaisons amont et aval de ce mode de réalisation est représentée sur la figure 12.

En utilisant les caractéristiques de ce deuxième mode de réalisation, les étapes de montage d'un panneau sont réalisées de la façon suivante :
1. Pour la présentation des moyens d'accrochage 19' en face des moyens de fixation 8' des liaisons aval : le panneau 6 est introduit de biais dans le carter fan, de telle sorte que ses trois réglettes 10' de maintien aval s'insèrent dans les crochets de fixation 11' prévus pour les recevoir.
2. L'encastrement de la liaison aval et la présentation des moyens d'accrochage 20' du panneau devant les moyens de fixation 7' de la liaison amont se font en un seul mouvement: le panneau est pivoté et plaqué contre les moyens de fixation amont 7'. De cette façon, les crochets de fixation 11' en aval sont contraints et offrent un maintien efficace des panneaux.
3. En ce qui concerne le verrouillage, les vis 17 sont serrées à l'aide de l'écrou 18 prévu à cet effet.

De manière avantageuse, dans ce deuxième mode de réalisation, pour corriger les défauts de forme du carter et utiliser, le cas échéant, des panneaux identiques, des cales 22 et 21 peuvent être introduites respectivement lors de des étapes d'encastrement de la liaison aval et de plaquage de la liaison amont.

Les deux modes de réalisation qui ont été décrits peuvent donner lieu à des variantes en combinant leurs types de fixations aval et amont.

L'invention a été décrite pour le cas de figure où l'espace annulaire à remplir avec les panneaux acoustiques se situe sur la partie amont du carter de soufflante. Elle est cependant aisément transposable, jusqu'au procédé de montage, au cas où l'espace annulaire se trouverait à l'extrémité aval du carter. Il suffit dans ce cas d'inverser les fonctions de l'aval et de l'amont en relation avec les premiers et seconds évidements de chaque panneau.

Dans le cas où l'espace annulaire se trouverait éloigné de l'extrémité, l'invention peut être utilisée. Le procédé de montage est applicable lorsque la structure qui se trouve en face desdits second évidements lorsque le panneau est positionné sur le carter est elle-même amovible.

## Revendications

1. Panneau acoustique (6) destiné à être fixé intérieurement à un carter de soufflante (1) d'un turboréacteur, comportant une face extérieure (61) et une face intérieure (62) courbées autour d'un axe et deux faces transversales opposées axialement, la face courbe extérieure (61) présentant au moins un premier évidement (9, 9') du côté d'une première face transversale et au moins un second évidement (12, 12') du côté de la face transversale opposée, lesdits évidements comprenant chacun un moyen d'accrochage et n'étant pas débouchant sur la face courbe intérieure (62) du panneau, **caractérisé en ce que** l'un desdits moyens d'accrochage (19, 19') est aménagé dans ledit premier évidement (9, 9') et comporte au moins un organe d'encastrement axial (10,10'), mâle ou femelle.

2. Panneau acoustique (6) selon la revendication 1 dans lequel l'organe d'encastrement axial (10') affleure à la face courbe extérieure (61).

3. Panneau acoustique (6) selon la revendication 1 ou 2 dans lequel un moyen d'accrochage (20, 20') agencé pour contenir au moins un moyen de verrouillage (15) est aménagé dans ledit second évidement (12, 12'), ce dernier débouchant sur la face transversale correspondante (64) par une ouverture de section sensiblement égale à la section maximale dudit évidement.

4. Panneau acoustique (6) selon la revendication 3 dans lequel le moyen d'accrochage (20) aménagé dans ledit second évidement (12) est agencé de telle sorte que ledit moyen de verrouillage (15), comportant par exemple une vis, est appliqué dans le sens axial.

5. Panneau acoustique (6) selon la revendication 3 dans lequel le moyen d'accrochage (20') aménagé dans ledit second évidement (12') est agencé de telle sorte que ledit moyen de verrouillage (15), comportant par exemple une vis, est appliqué dans le sens radial.

6. Turboréacteur comportant un carter de soufflante (1), au moins deux panneaux acoustiques (6) selon l'une des revendications précédentes, et des moyens de fixation (8, 8', 7, 7') aptes à coopérer avec les moyens d'accrochages (19, 19', 20, 20') aménagés dans lesdits premiers et seconds évidements (9, 9',12, 12') pour maintenir les panneaux contre la paroi intérieure du carter.

7. Turboréacteur comportant un carter de soufflante (1), au moins deux panneaux acoustiques (6) selon les revendications 2 et 5, des moyens de fixation (8', 7') aptes à coopérer avec les moyens d'accrochages (19', 20') aménagés dans lesdits premiers et seconds évidements (9', 12') et des moyens de calage radial (21, 22) pour maintenir les panneaux contre la paroi intérieure du carter.

8. Turboréacteur selon l'une des revendications 6 ou 7 dans lequel lesdits panneaux acoustiques (6) sont disposés à une extrémité du carter (1), en présentant vers ladite extrémité leur face transversale (64), située du côté du second évidement.

9. Turboréacteur selon l'une des revendications 6 à 8 dans lequel les moyens de fixation (7, 7', 8, 8') sont solidaires du carter (1) et situés à l'intérieur de l'espace annulaire occupé par lesdits panneaux (6).

10. Turboréacteur selon la revendication précédente dans lequel les moyens de fixation (7, 7', 8, 8') sont collés au carter.

11. Turboréacteur selon l'une des revendications 6 à 10 dans lequel lesdits au moins deux panneaux (6) sont identiques.

12. Procédé de montage d'un panneau acoustique dans le carter de soufflante d'un turboréacteur selon l'une des revendications 6 à 11 dans lequel :
- ledit panneau (6) est introduit par l'intérieur contre le carter (1) de façon à présenter le moyen d'accrochage (19, 19') dudit premier évidement (9, 9') devant le moyen de fixation (8, 8') avec lequel il coopère,
- le moyen d'accrochage (19, 19') dudit premier évidement (9, 9') est encastré dans le moyen de fixation (8, 8') avec lequel il coopère de telle sorte que le moyen d'accrochage (20, 20') dudit second évidement est présenté devant le moyen de fixation (7,7') avec lequel il coopère,
- ledit moyen de verrouillage (15) est appliqué entre le moyen de fixation (7,7') et le moyen d'accrochage (20, 20') dudit second évidement.

## Patentansprüche

1. Akustische Platte (6), die dazu bestimmt ist, im Inneren eines Bläsergehäuses (1) eines Strahltriebwerkes befestigt zu werden, die eine Außenfläche (61) und eine Innenfläche (62) aufweist, die um eine Achse gekrümmt sind, sowie zwei axial gegenüberliegende transversale Flächen, wobei die äußere Kurvenfläche (61) wenigstens eine erste Aussparung (9,9') auf der Seite einer ersten transversalen Fläche und wenigstens eine zweite Aussparung (12,12') auf der gegenüberliegenden transversalen Fläche aufweist, wobei die Aussparungen jeweils ein Kopplungsmittel umfassen, welches nicht über die innere Kurvenfläche (62) der Platte hinausragt, **dadurch gekennzeichnet, dass** eines der Kopplungsmittel (19,19') in der ersten Aussparung (9,9') angeordnet ist und wenigstens ein männliches oder weibliches axiales Einbauorgan (10,10') umfasst.

2. Akustische Platte (6) nach Anspruch 1, bei der das axiale Einbaumittel (10') auf der äußeren Kurvenfläche (61) sichtbar wird.

3. Akustische Platte (6) nach Anspruch 1 oder 2, bei der ein Kopplungsmittel (20,20') eingerichtet ist, um wenigstens ein in der zweiten Aussparung (12,12') angeordnetes Verriegelungsmittel (15) aufzunehmen, wobei letzteres auf der entsprechenden transversalen Fläche (64) durch eine Querschnittsöffnung herauskommt, die ungefähr dem maximalen Querschnitt der Aussparung entspricht.

4. Akustische Platte (6) nach Anspruch 3, bei der das in der zweiten Aussparung (12) angeordnete Kopplungsmittel (20) derart eingerichtet ist, dass das Verriegelungsmittel (15), welches zum Beispiel eine Schraube umfasst, in axialer Richtung angewendet wird.

5. Akustische Platte (6) nach Anspruch 3, bei der das in der zweiten Aussparung (12') angeordnete Kopplungsmittel (20') derart eingerichtet ist, dass das Verriegelungsmittel (15), welches zum Beispiel eine Schraube umfasst, in radialer Richtung angewendet wird.

6. Strahltriebwerk, das ein Bläsergehäuse (1) mit wenigstens zwei akustischen Platten (6) nach einem der vorstehenden Ansprüche und Befestigungsmittel (8,8', 7,7') umfasst, die geeignet sind, um mit den in den ersten und zweiten Aussparungen (9,9', 12,12') angeordneten Kopplungsmitteln (19,19', 20,20') zusammenzuwirken, um die Platten gegen die Innenwand des Gehäuses zu halten.

7. Strahltriebwerk, das ein Bläsergehäuse (1) mit wenigstens zwei akustischen Platten (6) nach den Ansprüchen 2 und 5, Befestigungsmittel (8',7'), die geeignet sind, um mit den in den ersten und zweiten Aussparungen (9',12') angeordneten Kopplungsmitteln (19',20') zusammenzuwirken, und radiale Keilmittel (21,22) umfasst, um die Platten gegen die Innenwand des Gehäuses zu halten.

8. Strahltriebwerk nach einem der Ansprüche 6 oder 7, bei dem die akustischen Platten (6) an einem Ende des Gehäuses (1) angeordnet sind und zu dem Ende hin ihre transversale Fläche (64) zeigen, die sich auf der Seite der zweiten Aussparungen befindet.

9. Strahltriebwerk nach einem der Ansprüche 6 bis 8, bei dem die Befestigungsmittel (7,7',8,8') mit dem Gehäuse (1) fest verbunden sind und sich im Inneren des ringförmigen Bereiches befinden, der von den Platten (6) eingenommen wird.

10. Strahltriebwerk nach einem der vorstehenden Ansprüche, bei dem die Befestigungsmittel (7,7',8,8') an das Gehäuse angeklebt sind.

11. Strahltriebwerk nach einem der Ansprüche 6 bis 10, bei dem wenigstens zwei Platten (6) identisch sind.

12. Verfahren zur Montage einer akustischen Platte in dem Bläsergehäuse von einem Strahltriebwerk nach einem der Ansprüche 6 bis 11, bei dem:
- die Platte (6) durch das Innere gegen das Gehäuse (1) derart eingeführt wird, dass das Kopplungsmittel (19,19') der ersten Aussparung (9,9') vor dem Befestigungsmittel (8,8') erscheint, mit dem es zusammenwirkt,
- das Kopplungsmittel (19,19') der ersten Aussparung (9,9') in dem Befestigungsmittel (8,8') eingebaut ist, mit welchem es derart zusammenwirkt, dass das Kopplungsmittel (20,20') der zweiten Aussparung vor dem Befestigungsmittel (7,7') erscheint, mit dem es zusammenwirkt,
- das Verriegelungsmittel (15) zwischen dem Befestigungsmittel (7,7') und dem Kopplungsmittel (20,20') der zweiten Aussparung angewendet wird.

## Claims

1. Acoustic panel (6) to be fixed internally to a fan casing (1) of a turbojet engine, comprising an external face (61) and an internal face (62) both of which are curved about an axis and two axially opposed transverse faces, the external curved face (61) having at least one first recess (9, 9') on the side of a first transverse face and at least one second recess (12, 12') on the side of the opposite transverse face, said recesses each comprising an attachment means and not opening onto the internal curved face (62) of the panel, **characterised in that** one of said attachment means (19, 19') is provided in said first recess (9, 9') and comprises at least one axial embedding member (10, 10'), male or female.

2. Acoustic panel (6) according to claim 1, in which the axial embedding member (10') fits flush with the external curved face (61).vv

3. Acoustic panel (6) according to claim 1 or 2, in which an attachment means (20, 20') that is arranged so as to contain at least one locking means (15) is provided in said second recess (12, 12'), said second recess opening onto the corresponding transverse face (64) through an opening with a cross section that is substantially equal to the maximum cross section of said recess.

4. Acoustic panel (6) according to claim 3, in which the attachment means (20) which is provided in said second recess (12) is arranged so that said locking means (15), comprising for example a screw, is applied in the axial direction.

5. Acoustic panel (6) according to claim 3, in which the attachment means (20') provided in said second recess (12') is arranged so that said locking means (15), comprising for example a screw, is applied in the radial direction.

6. Turbojet engine comprising a fan casing (1), at least two acoustic panels (6) according to one of the preceding claims, and fixing means (8, 8', 7, 7') that are capable of cooperating with the attachment means (19, 19', 20, 20') that are provided in said first and second recesses (9, 9', 12, 12') in order to hold the panels against the internal wall of the casing.

7. Turbojet engine comprising a fan casing (1), at least two acoustic panels (6) according to claims 2 and 5, fixing means (8', 7') capable of cooperating with the attachment means (19', 20') that are provided in said first and second recess (9', 12') and radial adjustment means (21, 22) for holding the panels against the internal wall of the casing.

8. Turbojet engine according to claim 6 or 7, in which said acoustic panels (6) are arranged at one end of the casing (1), having towards said end the transverse face (64) thereof, which is located on the side of the second recess.

9. Turbojet engine according to one of claims 6 to 8, in which the fixing means (7, 7', 8, 8') are rigidly connected to the casing (1) and are located in the annular space occupied by said panels (6).

10. Turbojet engine according to the preceding claim, in which the fixing means (7, 7', 8, 8') are bonded to the casing.

11. Turbojet engine according to one of claims 6 to 10, in which said at least two panels are identical.

12. Method for mounting an acoustic panel in a fan casing of a turbojet engine according to one of claims 6 to 11, in which:
- said panel (6) is introduced through the inside against the casing (1) so as to offer up the attachment means (19, 19') of said first recess (9, 9') in front of the fixing means (8, 8') with which it cooperates,
- the attachment means (19, 19') of said first recess (9, 9') is embedded in the fixing means (8, 8') with which it cooperates so that the attachment means (20, 20') of said second recess is offered up in front of the fixing means (7, 7') with which it cooperates,
- said locking means (15) is applied between the fixing means (7, 7') and the attachment means (20, 20') of said second recess.
